# EUROPÄISCHE PATENTSCHRIFT

(11) **EP 2 898 783 B1**
(45) Veröffentlichungstag und Bekanntmachung des Hinweises auf die Patenterteilung: **12.06.2019**
(21) Anmeldenummer: 14199860.9
(22) Anmeldetag: 22.12.2014
(51) Int. Cl.: A23G 3/06, A23G 7/00, B21B 1/088, B29C 53/18, B29C 55/18, A21C 3/02, A23P 10/28, A23P 30/00

(54) **Vorrichtung zum Formen einer formbaren Masse**
Device for forming a mouldable mass
Dispositif pour le moulage d'une masse façonnable

(30) Priorität: 23.01.2014 DE 102014201243
(43) Veröffentlichungstag der Anmeldung: 29.07.2015
(73) Patentinhaber: ROBERT BOSCH GMBH, 70442 Stuttgart (DE)
(72) Erfinder: Kappes, Holger, 74081 Heilbronn (DE); Schongen, Jörg, 47929 Grefrath (DE)

(56) Entgegenhaltungen:
- GB-A- 254 518
- GB-A- 689 104
- US-A- 1 542 348
- US-A- 2 655 118
- US-A- 2 960 044

## Beschreibung

Die Erfindung geht aus von einer Vorrichtung zum Formen einer formbaren Masse nach der Gattung des unabhängigen Anspruchs. Eine gattungsgemäße Vorrichtung ist bereits bekannt aus der EP 1 094 717 B1. Zum Abtrennen von Einzelstücken von einem kontinuierlich bewegten Massestrang sind zwei beidseitig des Massestrangs angeordnete Schneidmesser vorgesehen. Die Schneidmesser tragenden Messerhalter sind senkrecht zur Förderrichtung des Massestrangs mittels einer Stange miteinander gekoppelt, wobei die Messerhalter auf dieser Stange verschiebbar angeordnet sind.

Aus der US 1542348 ist bereits eine Vorrichtung zum Formen von plastischem Material bekannt. Die Dicke der zu formenden Masse lässt sich über verstellbare Walzen realisieren.

Aus der US 2960044 ist eine Vorrichtung zur einstellbaren Portionierung eines Teigs vorgesehen.

Der Erfindung liegt die Aufgabe zugrunde, eine flexible Anpassung an unterschiedliche Abmessungen der auszuformenden Masse in einfacher Weise vorzunehmen. Diese Aufgabe wird gelöst durch die Merkmale des unabhängigen Anspruchs.

### Vorteile der Erfindung

Bei der erfindungsgemäßen Vorrichtung gemäß den Merkmalen des unabhängigen Anspruchs kann eine einfache Anpassung der Breite und/oder Dicke der formbaren Masse vorgenommen werden. Die erfindungsgemäße Vorrichtung minimiert dadurch den Produktausschuss. Denn beim anschließenden Schneiden von Masseteppichen, wie beispielsweise für Müsli-, Schoko-, Protein- und Fruchtriegel, werden aufgrund der flexiblen Einstellmöglichkeiten der formbaren Masse Abfallstreifen reduziert oder sogar vollständig eliminiert. Auf diese Weise verringert sich der Produktausschuss, was zu einer Senkung der Produktionskosten und zu einer Verkürzung der Amortisationszeit beiträgt. Die bevorzugt stufenlos arbeitende Formvorrichtung bietet eine flexible Arbeitsbreite und ermöglicht so eine einfache, werkzeuglose Einstellung. Die Schneidevorgänge zur Produktion von unterschiedlichen Größen werden dadurch optimiert, da keine oder nur ein minimaler Kantenschnitt an den Außensträngen entsteht. Die Arbeitsbreite kann vorteilhafter Weise bei laufendem Betrieb einfach und ohne Hilfsmittel geändert werden, um den Abfallstreifen möglichst gering zu halten. Dies erhöht die Verfügbarkeit und Leistung der Vorrichtung. Die Vorrichtung ermöglicht eine maximale Produktauslastung, da Ausschuss aufgrund von Stopps der Vorrichtung verhindert wird. Dies wird erfindungsgemäß durch einen Verstellmechanismus erreicht zur Veränderung der Breite des Masseteppichs. Erfindungsgemäß ist vorgesehen, dass die erste Walze und/oder die zweite Walze entlang der Drehachse verstellbar ausgebildet ist/sind zur Veränderung der Breite B. Dadurch lässt sich eine besonders komfortable, gefahrlose und präzise Einstellung bei laufendendem Betrieb der Vorrichtung erreichen.

In einer zweckmäßigen Weiterbildung ist vorgesehen, dass der Behälter zur Aufnahme der zu formenden Masse zumindest eine Seitenwand umfasst, die entlang der Drehachse der Walzen verschiebbar ausgebildet ist und damit die Formbreite verändert. Dadurch lässt sich in besonders einfacher Weise die zu formende Masse bereits im noch nicht geformten Zustand in die gewünschte Breite bringen. Über den Verstellmechanismus ist diese Einstellung sehr einfach und präzise möglich.

In einer zweckmäßigen Weiterbildung ist vorgesehen, dass der Behälter zumindest eine zweite Seitenwand umfasst, die entlang der Drehachse verstellbar ausgebildet ist zur Veränderung der Breite B. Dadurch lässt sich eine symmetrische Verstellung in Bezug zur Mittelachse der Vorrichtung die Breite B durchführen, die wegen einer gleichmäßigeren Einwirkung auf die im Behältnis befindliche zu formende Masse zu bevorzugen ist.

In einer zweckmäßigen Weiterbildung ist vorgesehen, dass die Seitenwand an einem Ende zumindest einer Walze anschlägt und/oder eine Walze umfangsseitig zumindest teilweise umschließt. Besonders bevorzugt ist vorgesehen, dass die zweite Seitenwand an einem Ende der zweiten Walze anschlägt und und/oder die erste Walze umfangsseitig zumindest teilweise umschließt. Damit wird einerseits eine gute Masseführung im Formbereich ermöglicht, während ein Verstellen der Breite auch während des laufenden Betriebs durchgeführt werden kann. Hierzu ist besonders zweckmäßig vorgesehen, dass die Seitenwand zumindest eine Ausnehmung oder Randkontur aufweist, die auf die Außenkontur der Walze abgestimmt ist.

In einer zweckmäßigen Weiterbildung ist ein Verstellmechanismus vorgesehen, über den der Abstand der Drehachsen veränderbar ist. Besonders zweckmäßig ist zumindest eine Seitenwand bzw. Rückwand des Behälters parallel zur Verstellachse der zumindest einen Walze ausgebildet. Dadurch lässt sich auch die Dicke des Masseteppichs verstellen, ohne die Funktionalität der Breitenverstellung zu beeinträchtigen.

In einer zweckmäßigen Weiterbildung ist die konstruktive Ausführung der Vorrichtung dahingehend ausgeführt, dass die Zugänglichkeit innerhalb der Vorrichtung aus Gründen der Inspektion, der Reinigung und der Hygiene sehr leicht und einfach möglich ist. Besonders zweckmäßig ist hierfür, dass die beiden Seitenwände bzw. Rückwand des Behälters ohne Werkzeug zu öffnen oder abnehmbar sind. Dadurch lässt sich die Formmaschine leicht (schnell und einfach) reinigen.

Weitere zweckmäßige Weiterbildungen ergeben sich aus weiteren abhängigen Ansprüchen und aus der Beschreibung.

### Zeichnung

Ein Ausführungsbeispiel einer Vorrichtung zum Formen einer formbaren Masse ist in der Zeichnung dargestellt und wird nachfolgend näher beschrieben.

Es zeigen:
Figur 1 eine schamtische Darstellung der Vorrichtung in der Vorderansicht,
Figur 2 die Vorrichtung der Figur 1 in der Seitenansicht,
Figur 3 Walzen und Seitenwände bei Nennbreite,
Figur 4 die Komponenten der Figur 3 in der Seitenansicht mit Blick auf die erste Seitenwand,
Figur 5 die Komponenten der Figur 3 in der Seitenansicht mit Blick auf die zweite Seitenwand,
Figur 6 Walzen und Seitenwände bei Maximalbreite sowie
Figur 7 Walzen und Seitenwände bei Minimalbreite.

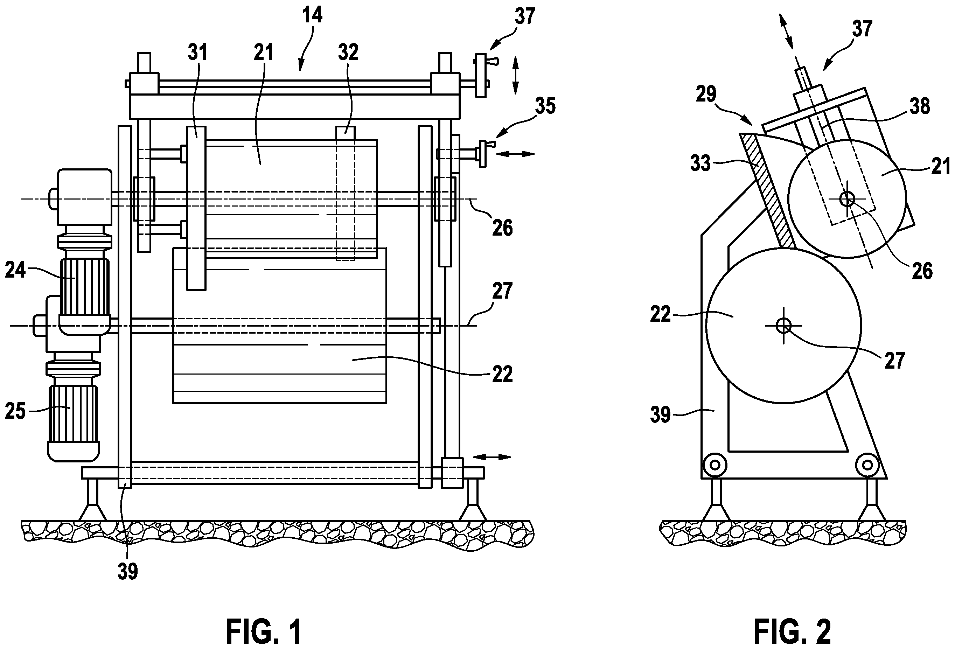

Eine Vorrichtung 14 zum Formen einer formbaren Masse 10 gemäß Figur 1 umfasst einen Rahmen 39, der die weiteren Komponenten der Vorrichtung 14 aufnimmt. Hierbei sind eine erste Walze 21 mit einer ersten Drehachse 26 und eine zweite Walze 22 mit einer zweiten Drehachse 27 übereinander angeordnet. Hierbei sind die Drehachsen 26, 27 der beiden Walzen 21, 22 parallel zueinander orientiert. Zwischen den beiden Walzen 21, 22 bildet sich ein Spalt aus, der der Dicke D der geformten Masse 10 bzw. Masseteppich entspricht. Die Walzen 21, 22 sind über nicht näher bezeichnete Achsen in dem Rahmen 39 drehbar gelagert und werden von einem ersten Antrieb 24 bzw. einem zweiten Antrieb 25 in eine rotierende Bewegung versetzt. Am Rahmen 39 ist ein Verstellmechanismus 35 zur Verstellung der Breite B des ausgeformten Masseteppichs vorgesehen wie nachfolgend näher erläutert. Der Verstellmechanismus 35 dient zum Verstellen der ersten Walze 21 und/oder der zweiten Walze 22. Die Seitenwände 31, 32 sind Teil eines Behälters 29 wie beispielsweise ein Trichter, in dem sich die zu formende Masse 10 befindet. Die erste Seitenwand 31 liegt mit der zur zweiten Seitenwand 32 orientierten Seite an einer Stirnseite der zweiten Walze 22 an. Die zweite Seitenwand 32 liegt mit der zur ersten Seitenwand 31 orientierten Seite an einer Stirnseite der ersten Walze 21 an. Der Verstellmechanismus 35 kann ein manuell betätigbares Handrad umfassen, das über entsprechende Spindeln oder ähnliches auf die verstellbaren Komponenten (z.B. Walzen 21, 22 bzw. Seitenwände 31, 32) ggf. über weitere mechanische Komponenten einwirkt. Im oberen Bereich der Vorrichtung 14 befindet sich ein weiterer Verstellmechanismus 37, über den der Abstand der beiden Walzen 21, 22 zur Einstellung der Dicke D des Masseteppichs verändert werden kann. Zum Anzeigen der jeweiligen Einstellung besitzen beide Verstellmechanismen 35, 37 einen Indikator (Zählwerk).

Aus Figur 2 wird ersichtlich, dass der Verstellmechanismus 37 die erste Walze 21 entlang einer Verstellachse 38 verstellen kann. Die Verstellachse 38 ist bevorzugt um einen geeigneten Winkel gegenüber der Vertikalen geneigt. Auch eine Rückwand 33 des Behälters 29 ist entsprechend gegenüber der Vertikalen geneigt und bevorzugt parallel zur Verstellachse 38 orientiert. Damit lässt sich eine Verstellung des Abstandes der Walzen 21, 22 und damit eine Verstellung der Dicke D des ausgeformten Masseteppichs verändern.

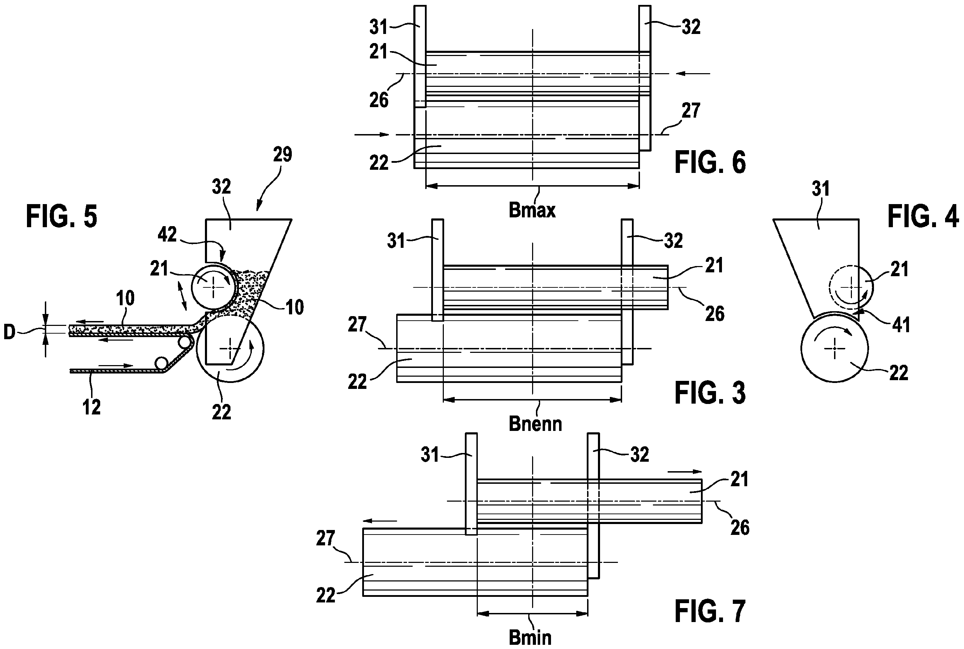

In den Figuren 3 bis 5 ist in vereinfachter Form gezeigt, wie die Walzen 21, 22 und Seitenwände 31, 32 zueinander angeordnet sind, um aus der zu formenden Masse 10 einen Masseteppich mit einer Nennbreite Bnenn zu erzeugen. Hierbei schlägt die Wange, nämlich die erste Seitenwand 31, fest am Ende (eine Stirnfläche der ersten Walze 21, die senkrecht zur Drehachse 26 orientiert ist) der ersten Walze 21 an. Dabei umschließt die erste Seitenwand 31 die zweite Walze 22 auf deren Umfang bzw. Mantel zumindest teilweise, so dass die erste Seitenwand 31 relativ zur zweiten Walze 22 flexibel in der Breite verschiebbar ist. Hierzu weist die erste Seitenwand 31 eine Ausnehmung 41 bzw. Randkontur auf, die der Außenkontur der zweiten Walze 22 entspricht. Die Ausnehmung 41 ist teilkreisförmig.

Ähnlich ist die zweite Seitenwand 32 wie Figur 5 zu entnehmen ausgebildet. Hierbei schlägt die Wange, die zweite Seitenwand 32, fest am Ende (an einer Stirnfläche der zweiten Walze 32, die senkrecht zur Drehachse 26 orientiert ist) an. Dabei umschließt die zweite Seitenwand 32 die erste Walze 21 auf dem Umfang bzw. Mantel zumindest teilweise, so dass die zweite Seitenwand 32 relativ zur ersten Walze 21 flexibel in der Breite verschiebbar ist. Hierzu weist die zweite Seitenwand 32 eine Ausnehmung 42 bzw. Randkontur auf, die der Außenkontur der ersten Walze 21 entspricht. Die Ausnehmung 42 ist teilkreisförmig.

Weiterhin zeigt Figur 5, wie die zu formende Masse 10 sich in einem Behältnis 29 befindet, durch die rotierenden Walzen 21, 22 zu einem Masseteppich der Dicke D und der Breite B geformt wird und mit Hilfe einer Transportvorrichtung 12 kontinuierlich weitertransportiert wird.

Bei der Stellung der Seitenwände 31, 32 der Vorrichtung 14 gemäß Figur 3 wird ein Masseteppich der Nennbreite Bnenn erzeugt. Soll nun ein Masseteppich der maximalen Breite Bmax erzeugt werden wie in Figur 6 gezeigt, aktiviert der Benutzer den Verstellmechanismus 35. Dadurch wird die erste Walze 21 zusammen mit der auf der linken Seite befindlichen ersten Seitenwand 31 weiter nach außen entlang der Drehachse 26, gemäß der Figur 6 nach links, gebracht. Parallel oder nacheinander verschieben sich sowohl die zweite Seitenwand 32 sowie die zweite Walze 22 ebenfalls weiter nach außen entlang der Drehachse 27. Dadurch verbreitert sich der zwischen den Innenseiten der beiden Seitenwänden 31, 32 liegende Abstand auf die Maximalbreite Bmax. Die Minimalbreite Bmin gemäß Figur 7 wird erreicht, wenn die erste Seitenwand 31 mit der ersten Walze 21 so weit als möglich zur Mitte, gemäß Figur 7 nach rechts bewegt wird. Parallel oder nacheinander betätigt der Verstellmechanismus 35 auch die zweite Seitenwand 32 und die zweite Walze 32 soweit als möglich zur Mitte, gemäß Figur 7 nach links. Der Abstand zwischen den beiden Seitenwänden 31, 32 und damit die Breite B wird minimal (Bmin).

Während des Verschiebens gleitet der Ausnehmung 41 der ersten Seitenwand 31 entlang der zweiten Walze 22, die Ausnehmung 42 der zweiten Seitenwand 32 entlang der ersten Walze 21.

Die konstruktive Ausführung der Vorrichtung 14 wurde dahingehend ausgeführt, dass die Zugänglichkeit innerhalb der Vorrichtung 14 aus Gründen der Inspektion, der Reinigung und der Hygiene sehr leicht und einfach möglich ist. Besonders zweckmäßig ist hierfür, dass die beiden Seitenwände 31, 32 und/oder die Rückwand 33 des Behälters 29 ohne Werkzeug zu öffnen oder abnehmbar sind. Dadurch lässt sich die Vorrichtung 14 leicht (schnell und einfach) reinigen.

Bei einem kontinuierlichem Formprozess (hier zur Herstellung von Süßwarenriegel aus formbaren Massen 10 von z.B. für Cerealien, Müsli, Karamell, Schaumnougat, Nussnougat, Frucht, Teige, Marzipan, Persipan, Protein, Kokos, Fettmassen, Compound, Schokolade, Nüsse, Samenkerne, Hackfleisch, Fleischmett, Massen und Teige aus Milchprodukten [Käse, Quark, ...],etc.) wird endlos ein Teppich/Band/Strang zwischen den zwei rotierenden Walzen 21, 22 ausgeformt und anschließend über das Transportmittel 12 wie beispielsweise ein Transportband/Gitterband/Rollenbahn weitertransportiert. Die Ausformhöhe/Produktdicke D wird über die Einstellung mittels Verstellmechanismus 37 der beiden Walzen 21, 22 parallel zueinander bestimmt. In der Regel ist die Ausformbreite B über die seitliche Begrenzungen, z.B. feststehende Wände eines Aufgabetrichters, fest und unveränderbar vorgegeben. In der Praxis besteht der Wunsch, einen Einfluss auf die Ausformbreite ausüben zu können. Zusätzlich soll diese Einstellung der Breite komfortabel, gefahrlos und präzise bei laufender Produktion/Prozess durchführbar sein. Hierzu ist vorgesehen, beide Walzen 21, 22 gegeneinander seitlich zu verstellen, wobei die eine Wange, die erste Seitenwand 31, immer am Ende der oberen Walze 21 fest anschlägt, dabei jedoch die zweite Walze 22 auf dem Umfang teilweise umschlingt und immer flexibel über die Breite auf der zweiten Walze 22 mitlaufen kann. Auch die zweite Wange, die zweite Trichter- bzw. Seitenwand 32, schlägt immer am Ende der zweiten Walze 22 fest an, wobei sie jedoch die erste Walze 21 auf ihrem Umfang teilweise umschlingt und auf dieser immer flexibel in der Breite verschiebbar ist. Dadurch kann sehr einfach die Breite B beeinflusst werden. Über eine stufenlose Breitenverstellung kann die gesamte Produktion optimiert werden. Das bedeutet, dass nur noch die optimale Breite B ausgeformt wird, welche für den nachfolgenden Schneideprozess optimal ist. Im nachfolgenden Schneideprozess, werden mit rotierenden Kreismessern einzelne Stränge aus dem Masseteppich 10 herausgeschnitten. Dies entspricht dann der Riegelbreite (Format). Bei unterschiedlichen Formaten kann über die Vorrichtung 14 der Masseteppich 10 entsprechend in seiner Breite B optimiert werden, sodass beidseitig keine oder je nach Wunsch nur minimale seitlichen Kantenabschnitte (Abfallstreifen) entstehen. Zum besseren Verständnis eine kleine Beispielrechnung:
- Format A: 20 mm Riegelbreite x 30 Stränge = 600 mm Ausformbreite B
- Format B: 27 mm Riegelbreite x 23 Stränge = 621 mm Ausformbreite B
- Format C: 16 mm Riegelbreite x 38 Stränge = 608 mm Ausformbreite B Wenn diese drei Formate A-C auf einer Linie hergestellt werden müssen, so muss eine Formmaschine ohne Breiteneinstellung, immer auf die größte Ausformbreite ausgelegt werden, also auf eine Breite von 621 mm. Wird jedoch das Format A produziert, verbleiben 2x 10,5 mm = 21 mm seitlicher Kantenabschnitt (Abfallstreifen) ungenutzt als Verschnitt oder Abfall übrig. Mit der Vorrichtung 14 kann während der Produktion oder vorab die Breite B entsprechend eingestellt werden, so dass kein seitlicher Kantenabschnitt (Abfallstreifen) entsteht - die Formbreite B wird über den Verstellmechanismus 35 von 621 mm auf 600 mm reduziert. Die Einstellung der Breite B geschieht sehr leicht und präzise über ein Handrad mit digitalem Zähler als Bestandteil des Verstellmechanismus 35. Beispielsweise könnte ein Verstellbereich von 600 ... 650 mm vorgesehen werden.

Grundsätzlich ist dieses Prinzip und diese Vorrichtung 14 auf jeden kontinuierlichen Formprozess zwischen zwei Walzen anwendbar, z. B. Stahl-Walzwerk, (Span-,Isolier-, etc.) Plattenproduktion, etc.

## Patentansprüche

1. Vorrichtung zum Formen einer formbaren Masse, umfassend zumindest einen Behälter (29) zur Aufnahme einer zu formenden Masse (10), zumindest eine erste Walze (21), die um eine erste Drehachse (26) rotieren kann, und zumindest eine zweite Walze (22), die um eine zweite Drehachse (27) rotieren kann, wobei die Masse (10) zwischen den Walzen (21, 22) zum Formen durchführbar ist, so dass eine geformte Masse (10) mit einer Breite (B) entsteht, wobei zumindest ein Verstellmechanismus (35) vorgesehen ist zur Veränderung der Breite (B), **dadurch gekennzeichnet, dass** die erste Walze (21) und/oder die zweite Walze (22) entlang der Drehachse (26, 27) verstellbar ausgebildet sind zur Veränderung der Breite (B).

2. Vorrichtung nach Anspruch 1, **dadurch gekennzeichnet, dass** der Behälter (29) zumindest eine Seitenwand (31, 32) umfasst, die zur Veränderung der Breite (B) entlang der Drehachse (26, 27) verstellbar ausgebildet ist.

3. Vorrichtung nach Anspruch 2, **dadurch gekennzeichnet, dass** der Behälter (29) zumindest eine zweite Seitenwand (32) umfasst, die zur Veränderung der Breite (B) entlang der Drehachse (26, 27) verstellbar ausgebildet ist.

4. Vorrichtung nach einem der vorhergehenden Ansprüche, **dadurch gekennzeichnet, dass** zumindest der Verstellmechanismus (35) die erste Walze (21) und/oder die zweite Walze (22) entlang der Drehachse (26, 27) verstellt.

5. Vorrichtung nach einem der vorhergehenden Ansprüche, **dadurch gekennzeichnet, dass** eine Seitenwand (31, 32) an einem Ende zumindest einer Walze (21, 22) anschlägt und/oder eine Walze (21, 22) umfangsseitig zumindest teilweise umschließt.

6. Vorrichtung nach einem der vorhergehenden Ansprüche, **dadurch gekennzeichnet, dass** eine Seitenwand (31) an einem Ende der ersten Walze (21) anschlägt und die zweite Walze (22) umfangsseitig zumindest teilweise umschließt sowie dass eine zweite Seitenwand (32) an einem Ende der zweiten Walze (22) anschlägt und und/oder die erste Walze (21) umfangsseitig zumindest teilweise umschließt.

7. Vorrichtung nach einem der vorhergehenden Ansprüche, **dadurch gekennzeichnet, dass** eine Seitenwand (31, 32) zumindest eine Ausnehmung (41, 42) oder Randkontur aufweist, die auf die Außenkontur der Walze (21, 22) abgestimmt ist.

8. Vorrichtung nach einem der vorhergehenden Ansprüche, **dadurch gekennzeichnet, dass** zumindest eine Seitenwand (31, 32) und/oder eine Rückwand (33) des Behälters (29) klappbar oder insbesondere werkzeuglos von der Vorrichtung (14) und/oder zumindest einer Walze (21, 22) lösbar ausgebildet sind.

9. Vorrichtung nach einem der vorhergehenden Ansprüche, **dadurch gekennzeichnet, dass** ein Verstellmechanismus (37) vorgesehen ist, über den der Abstand der Drehachsen (26, 27) veränderbar ist, wobei zur Veränderung des Abstands der Drehachsen (26, 27) zumindest eine Walze (21) relativ zur anderen Walze (22) verschiebbar entlang einer Verstellachse (38) angeordnet ist.

10. Vorrichtung nach Anspruch 9, **dadurch gekennzeichnet, dass** zumindest eine Seitenwand bzw. Rückwand (33) des Behälters (29) parallel zur Verstellachse (38) ausgebildet ist.

## Claims

1. Apparatus for moulding a mouldable substance, comprising at least one container (29) for accommodating a substance (10) which is to be moulded, at least one first roller (21), which can rotate about a first axis of rotation (26), and at least one second roller (22), which can rotate about a second axis of rotation (27), wherein the substance (10) can be guided through between the rollers (21, 22) for moulding purposes, a moulded substance (10) having a width (B) being produced as a result, wherein at least one adjustment mechanism (35) is provided for the purpose of altering the width (B), **characterized in that** the first roller (21) and/or the second roller (22) are designed to be adjustable along the axis of rotation (26, 27) for the purpose of altering the width (B).

2. Apparatus according to Claim 1, **characterized in that** the container (29) comprises at least one side wall (31, 32), which is designed to be adjustable along the axis of the rotation (26, 27) for the purpose of altering the width (B).

3. Apparatus according to Claim 2, **characterized in that** the container (29) comprises at least one second side wall (32), which is designed to be adjustable along the axis of rotation (26, 27) for the purpose of altering the width (B).

4. Apparatus according to one of the preceding claims, **characterized in that** at least the adjustment mechanism (35) adjusts the first roller (21) and/or the second roller (22) along the axis of rotation (26, 27).

5. Apparatus according to one of the preceding claims, **characterized in that** a side wall (31, 32) strikes against one end of at least one roller (21, 22) and/or at least partially encloses a roller (21, 22) circumferentially.

6. Apparatus according to one of the preceding claims, **characterized in that** one side wall (31) strikes against one end of the first roller (21) and at least partially encloses the second roller (22) circumferentially, and also **in that** a second side wall (32) strikes against one end of the second roller (22) and/or at least partially encloses the first roller (21) circumferentially.

7. Apparatus according to one of the preceding claims, **characterized in that** a side wall (31, 32) has at least one recess (41, 42) or a peripheral contour which is coordinated with the outer contour of the roller (21, 22).

8. Apparatus according to one of the preceding claims, **characterized in that** at least one side wall (31, 32) and/or a rear wall (33) of the container (29) is designed for swing action or to be releasable from the apparatus (14) and/or at least one roller (21, 22), in particular without any tools being required.

9. Apparatus according to one of the preceding claims, **characterized by** the provision of an adjustment mechanism (37) via which it is possible to alter the distance between the axes of rotation (26, 27), wherein, for the purpose of altering the distance between the axes of rotation (26, 27), at least one roller (21) can be displaced relative to the other roller (22) along an adjustment axis (38).

10. Apparatus according to Claim 9, **characterized in that** at least one side wall or rear wall (33) of the container (29) is designed to be parallel to the adjustment axis (38).

## Revendications

1. Dispositif permettant de façonner une matière façonnable, comportant au moins un récipient (29) destiné à recevoir une matière à façonner (10), au moins un premier cylindre (21) qui peut tourner autour d'un premier axe de rotation (26), et au moins un deuxième cylindre (22) qui peut tourner autour d'un deuxième axe de rotation (27), dans lequel la matière (10) peut être guidée entre les cylindres (21, 22) pour le façonnage, de telle sorte qu'une matière façonnée (10) présentant une largeur (B) soit produite, dans lequel au moins un mécanisme de déplacement (35) est prévu pour modifier la largeur (B), **caractérisé en ce que** le premier cylindre (21) et/ou le deuxième cylindre (22) sont réalisés de manière déplaçable le long de l'axe de rotation (26, 27) pour modifier la largeur (B).

2. Dispositif selon la revendication 1, **caractérisé en ce que** le récipient (29) comporte au moins une paroi latérale (31, 32) qui est réalisée de manière déplaçable le long de l'axe de rotation (26, 27) pour modifier la largeur (B).

3. Dispositif selon la revendication 2, **caractérisé en ce que** le récipient (29) comporte au moins une deuxième paroi latérale (32) qui est réalisée de manière déplaçable le long de l'axe de rotation (26, 27) pour modifier la largeur (B).

4. Dispositif selon l'une des revendications précédentes, **caractérisé en ce qu'**au moins le mécanisme de déplacement (35) déplace le premier cylindre (21) et/ou le deuxième cylindre (22) le long de l'axe de rotation (26, 27).

5. Dispositif selon l'une des revendications précédentes, **caractérisé en ce qu'**une paroi latérale (31, 32) vient en butée contre une extrémité d'au moins un cylindre (21, 22) et/ou entoure au moins partiellement un cylindre (21, 22) du côté périphérique.

6. Dispositif selon l'une des revendications précédentes, **caractérisé en ce qu'**une paroi latérale (31) vient en butée contre une extrémité du premier cylindre (21) et entoure au moins partiellement le deuxième cylindre (22) du côté périphérique, et une deuxième paroi latérale (32) vient en butée contre une extrémité du deuxième cylindre (22) et/ou entoure au moins partiellement le premier cylindre (21) du côté périphérique.

7. Dispositif selon l'une des revendications précédentes, **caractérisé en ce qu'**une première paroi latérale (31, 32) comprend au moins un évidement (41, 42) ou un contour de bord qui est adapté au contour extérieur du cylindre (21, 22).

8. Dispositif selon l'une des revendications précédentes, **caractérisé en ce qu'**au moins une paroi latérale (31, 32) et/ou une paroi arrière (33) du récipient (29) sont réalisées de manière rabattable ou en particulier de manière à pouvoir être détachées, sans outil, du dispositif (14) et/ou d'au moins un cylindre (21, 22).

9. Dispositif selon l'une des revendications précédentes, **caractérisé en ce qu'**un mécanisme de déplacement (37) est prévu, par le biais duquel la distance entre les axes de rotation (26, 27) est modifiable, au moins un cylindre (21) étant disposé de manière mobile par rapport à l'autre cylindre (22) le long d'un axe de déplacement (38) pour modifier la distance entre les axes de rotation (26, 27).

10. Dispositif selon la revendication 9, **caractérisé en ce qu'**au moins une paroi latérale ou une paroi arrière (33) du récipient (29) est réalisée parallèlement à l'axe de déplacement (38).
